## Europäisches Patentamt
## European Patent Office
## Office européen des brevets

(19)

(11) Veröffentlichungsnummer : **0 163 221**
**B1**

(12)

# EUROPÄISCHE PATENTSCHRIFT

(45) Veröffentlichungstag der Patentschrift :
**15.03.89**

(51) Int. Cl.⁴ : **G 11 B 23/02**

(21) Anmeldenummer : **85106129.1**

(22) Anmeldetag : **18.05.85**

(54) Vorrichtung zum Aufbewahren von Aufzeichnungsträgern, insbesondere zum Einbau in Kraftfahrzeuge.

(30) Priorität : **01.06.84 DE 8416751 U**

(43) Veröffentlichungstag der Anmeldung :
**04.12.85 Patentblatt 85/49**

(45) Bekanntmachung des Hinweises auf die Patenterteilung : **15.03.89 Patentblatt 89/11**

(84) Benannte Vertragsstaaten :
**AT BE CH DE FR GB IT LI NL SE**

(56) Entgegenhaltungen :
EP--A-- 0 092 666
AT--B-- 343 933
DE--A-- 2 521 371

(73) Patentinhaber : **idn inventions and development of novelties ag**
**Hartbertstrasse 9**
**CH-7002 Chur. (CH)**

(72) Erfinder : **Ackeret, Peter**
**Allmendstrasse 18**
**CH-8700 Küsnacht (CH)**

(74) Vertreter : **Dipl.-Ing. H. Marsch Dipl.-Ing. K. Sparing Dipl.-Phys.Dr. W.H. Röhl Patentanwälte**
**Rethelstrasse 123**
**D-4000 Düsseldorf 1 (DE)**

EP 0 163 221 B1

**Beschreibung**

Die Erfindung betrifft eine Vorrichtung zum Aufbewahren von Aufzeichnungsträgern, wie Audio- oder Videokassetten, Compactdisks und dergleichen, mit den im Oberbegriff des Anspruchs 1 genannten Merkmalen. Eine solche Vorrichtung ist in der EP-A-0 134 278 offenbart.

Bei der bekannten Vorrichtung erfolgt die Verriegelung des Schiebers im Gehäuse dadurch, daß das Kupplungsorgan in arretierenden Eingriff sowohl mit dem Schieberteil als auch mit dem Gehäuseteil gelangt, wenn der Schieberteil eingeschoben und von seiner Vorspannfeder wieder ein kleines Stück auswärts geschoben worden ist. Solche Vorrichtungen werden gern in Kraftfahrzeuge eingebaut, wobei die Einbaulage primär von der Bauart des Fahrzeugs abhängt. Aus ergonomischen Gründen wird man aber stets bestrebt sein, eine bedienungsfreundliche Lage zu wählen, und das ist diejenige, bei der sich der Schieber entgegen der Fahrtrichtung öffnet.

Um den bekannten Behälter zu öffnen, wird der Schieber ein kleines Stück in das Gehäuse hineingedrückt, wobei das Kupplungsorgan freikommt. In der erwähnten bevorzugten Einbaulage in Fahrzeugen sind aber natürlich der Behälter und alle seine Teile denselben Kräften unterworfen wie das Fahrzeug, seine Bestandteile und Insassen auch, mit dem Ergebnis, daß dei einer starken Verzögerung der Vorwärtsfahrt, insbesondere einem Notbremsmanöver, auch der Schieber relativ zum Gehäuse, das mit abgebremst wird, sich aufgrund seiner Trägheit einwärts bewegt, wodurch ungewollt die Arretierung gelöst wird. Dieser für die Anwendung in Kraftfahrzeugen unzuträgliche Nachteil trifft auch für ähnliche Verschlußkonstruktionen zu, bei denen ebenfalls das Lösen der Verriegelung durch Einschieben des Schiebers in das Gehäuse erfolgt (vgl. DE-OS 25 21 371).

Eine andere bekannte Vorrichtung großer Marktverbreitung ist in der DE-PS 22 48 408 beschrieben. Bei ihr ist an den Schieber eine Taste angeformt, die zum Lösen der Verriegelung etwa senkrecht zur Schieberbewegungsrichtung aus einer in das Gehäuse eingeformten Falle gehoben wird ; dabei führt die über eine Blattfeder mit dem Schieberboden verbundene, als Auslöseorgan dienende Taste eigentlich eine Schwenkbewegung aus.

Bei dieser Bauart ist die Gefahr der ungewollten Auslösung bei einem Bremsmanöver ebenfalls nicht ausgeschlossen, denn die Trägheit der Taste führt bei einer starken Abbremsung des Fahrzeugs ebenfalls zu einem auf sie wirkenden Drehmoment, das zum Auslösen ausreichen kann ; dies wird dadurch begünstigt, daß auf den Schieber und die in ihm gegebenenfalls untergebrachte Magnetbandkassette insgesamt die Trägheitskräfte einwirken und den Reibungsschluß zwischen dem Verriegelungsfortsatz der Taste und der zugeordneten Falle im Gehäuse aufheben.

Ausgehend von der im Oberbegriff des Anspruchs 1 definierten Vorrichtung liegt der Erfindung die Aufgabe zugrunde, die Verriegelungsanordnung weitgehend unempfindlich gegen Beschleunigungen bzw. Verzögerungen der gesamten Vorrichtung, wenn diese etwa in ein Kraftfahrzeug eingebaut ist, zu machen.

Die Lösung dieser Aufgabe ergibt sich aus dem kennzeichnenden Teil des Anspruchs 1 ; die Unteransprüche definieren zweckmäßige Weiterbildungen des Gegenstandes von Anspruch 1.

Das Auslöseorgan bildet mit seiner Vorspannfeder ein schwingungsfähiges System, das durch äußere Kräfte selbstverständlich auslenkbar ist. Man hat es aber in der Hand, durch entsprechende Dimensionierung der Teile (Masse des Auslöseorgans, Vorspannkraft der Feder) dafür zu sorgen, daß eine zum Auslösen des Schiebers ausreichende Auslenkung erst bei Beschleunigungen bzw. Verzögerungen auftritt, die im praktischen Einsatz nicht erreicht werden, selbst nicht bei einem normalen Auffahrunfall eines Kraftfahrzeugs.

Ausführungsbeispiele des Gegenstandes der Erfindung werden nachstehend unter Bezugnahme auf die beigefügten Zeichnungen im einzelnen erläutert.

Fig. 1 stellt in schematisiertem Längsschnitt eine Vorrichtung gemäß der Erfindung dar,

Fig. 2 zeigt perspektivisch, zum Teil weggebrochen, die Vorrichtung nach Fig. 1 in Explosionsdarstellung,

Fig. 3 zeigt analog Fig. 2 ein zweites Ausführungsbeispiel,

Fig. 4 zeigt im Schnitt parallel zu einer Compactdisk ein weiteres Ausführungsbeispiel,

Fig. 5 ist ein Teilschnitt nach Linie 5-5 der Fig. 4,

Fig. 6 ist eine Ansicht auf die hintere Kante eines Diskhalters,

Fig. 7 ist ein Teilschnitt analog zu Fig. 5 im Bereich der Auslösetaste,

Fig. 8 zeigt ein Detail aus Fig. 5, dieser gegenüber stark vergrößert,

Fig. 9 zeigt in Teilseitenansicht die Ausbildung der Frontwandbaugruppe,

Fig. 10 zeigt im Schnitt parallel zur Schieberteilbewegungsrichtung eine weitere Ausführungsform, bei der je ein Schieberteil für eine Compactdisk vorgesehen ist,

Fig. 11 ist eine Teilseitenansicht eines solchen Schieberteils,

Fig. 12 ist ein Teilschnitt der Fig. 10 im Tastenbereich,

Fig. 13 und 14 zeigen in zwei zueinander senkrechten Schnitten eine weitere Ausführungsform, ausgebildet zur Aufbewahrung von Compactkassetten,

Fig. 15 zeigt in zu Fig. 10 analoger Darstellung eine weitere Ausführungsform,

Fig. 16 ist eine Teilfrontansicht auf die Vorrichtung nach Fig. 15,

Fig. 17 bzw. 18 zeigen in zu Fig. 15 bzw. 16 analoger Darstellung eine weitere Ausführungsform,

Fig. 19 stellt teilperspektivisch die Vorrichtung
nach Fig. 17, 18 in geöffnetem Zustand dar,

Fig. 20 bis 22 zeigen in drei zueinander senkrechten Schnitten eine weitere Ausführungsform,

Fig. 23 bis 25 zeigen in zu Fig. 20 bis 22
analoger Form eine weitere Ausgestaltung, und

Fig. 26 zeigt perspektivisch im Teilschnitt die
letztgenannte Ausführungsform bei teilweise ausgeschobenem Schieberteil.

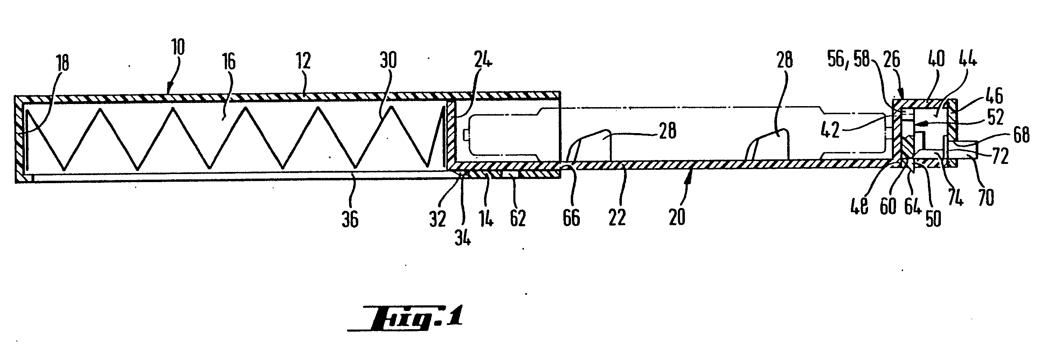

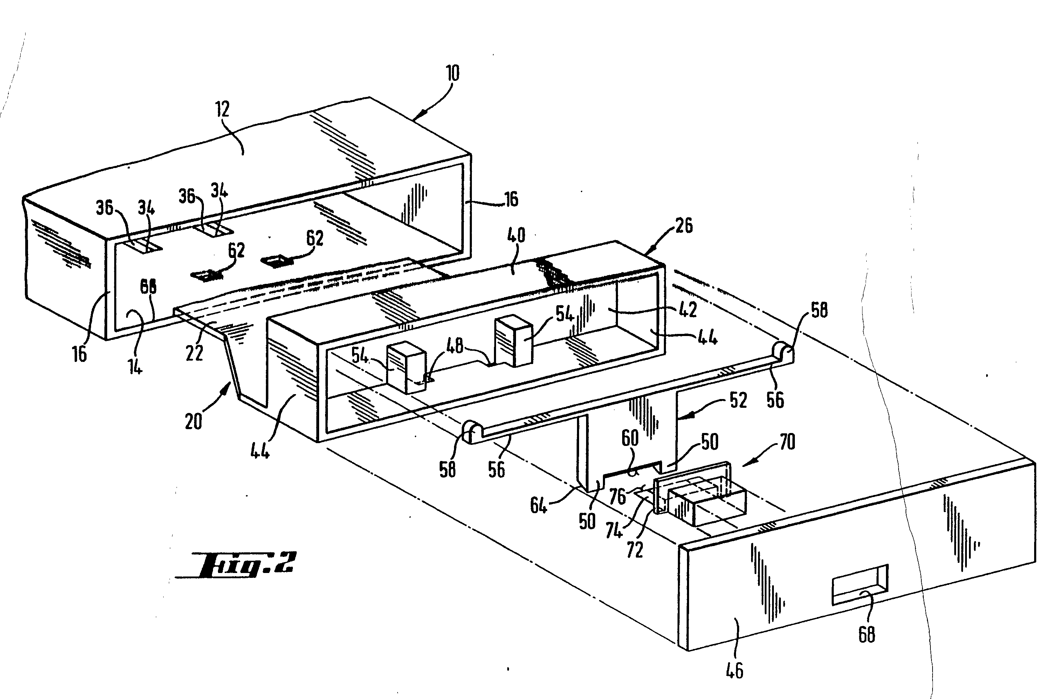

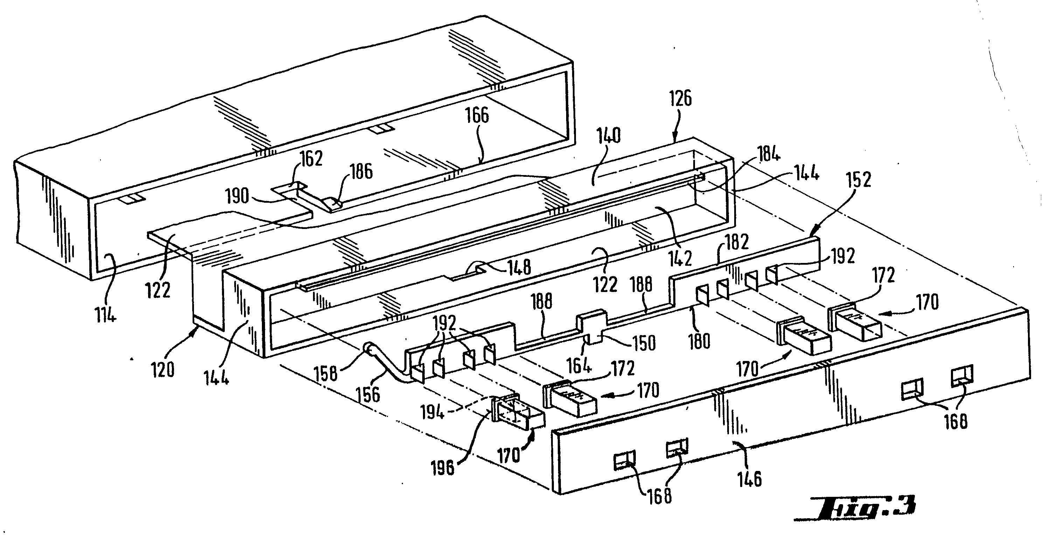

Man erkennt in Fig. 1 und 2 ein Gehäuse 10 mit
Deckwand 12, Bodenwand 14, Seitenwänden 16
und Rückwand 18. Der Schieber 20 umfaßt eine
Bodenplatte 22, eine Rückplatte 24 sowie einen
Riegelkasten 26. Von der Bodenplatte 22 stehen
zwei Nocken 28 hoch, die als Bandwickelsperrnocken für eine eingelegte Magnetbandkassette
dienen. Eine Schraubendruckfeder 30 spannt den
Schieber in die Offenposition gemäß Fig. 1 vor.
Diese Endlage ist definiert durch Anschlagnasen
32, angeformt an die Unterseite der Bodenplatte
22, im Zusammenwirken mit Endkanten 34 von
Führungsschlitzen 36 in der Bodenwand 14 des
Gehäuses.

Der Riegelkasten 26 ist mit seinen Kastenwandungen 40 (oben), 42 (hinten) und 44 (seitlich) an
die Schieberbodenplatte 22 angeformt. Die offene
Frontseite ist durch eine Frontplatte 46 abgeschlossen. Wenn, wie es bevorzugt ist, die Teile
10 und 20 aus thermoplastischem Kunststoff gespritzt sind, wird die Frontplatte eingeklebt oder,
was bevorzugt ist, ultraschallverschweißt. Dabei
können Zentriermittel, wie komplementäre Randflansche, vorgesehen sein, was hier nicht dargestellt ist.

Innerhalb des Riegelkastens 26 weist die Bodenplatte 22 zwei Durchbrüche 48 auf, durch die
sich die Riegelfortsätze 50 eines in den Kasten
eingesetzten Riegels 52 nach unten erstrecken.
Seitlich neben den Durchbrüchen 48 sind Führungsblöcke 54 angeformt, zwischen deren einander zugekehrten Führungsflächen der Riegel 52
geführt ist. Von der den Riegelfortsätzen 50 gegenüberliegenden Kante des Riegels 52 erstrecken sich seitlich Arme 56 mit Endfingern 58.
Die Abmessung des Riegels ist so festgelegt, daß
die Finger 58 gerade an der Unterseite der Kastenwandung 40 anliegen, wenn die Kante 60 des
Riegels, die zwischen den Riegelfortsätzen 50
liegt, auf der Oberseite der Bodenplatte aufsitzt.
In dieser Position ragen die Riegelfortsätze 50
durch die Durchbrüche 48 hindurch und erstrecken sich noch um eine Länge nach unten,
die etwas kleiner ist als die Dicke der Gehäusebodenwand 14 entspricht. In der eingeschobenen
Position des Schiebers greifen dann die Fortsätze
50 in Durchbrüche 62 dieser Bodenwand 14 und
halten den Schieber gegen die Vorspannung der
Feder 30 im Gehäuse. Auf ihrer dem Gehäuse
zugekehrten Seite sind die Riegelfortsätze 50 mit
Abschrägungen 64 versehen, die beim Einschieben des Schiebers aus der Position gemäß Fig. 1
auf die Stirnkante 66 der Gehäusebodenwand 14
auflaufen. Dadurch wird der Riegel 52 unter elastischer Deformation der Arme 56 nach oben
ausgelenkt, so daß der Schieber bis in die innere
Endlage einschiebbar ist, in der der Riegel unter
Entspannung der Arme 56 in die Durchbrüche 62
einfällt.

Die Frontplatte 46 weist in Ausfluchtung mit der
Riegelkante 60 einen Durchbruch 68 auf, in dem
eine als Auslöseorgan dienende Taste 70 gleitbeweglich aufgenommen ist. Die Taste 70 liegt mit
ihren Flanschen 72 an der Innenseite der Frontplatte 46 rings um deren Durchbruch 68 an. In
dieser Position greift ein Keilfortsatz 74 der Taste
unter die zu diesem Zweck etwas angeschrägte
Kante 60 des Riegels. Um den Schieber auszulösen, drückt der Benutzer auf die Taste, wodurch
der Riegel gegen die elastische Deformation der
Arme 56 durch die Keilwirkung des Fortsatzes 74
aus den Durchbrücken 62 gehoben wird. Die
Abmessungen sind dabei so getroffen, daß die
Endkante 76 des Fortsatzes 74 noch nicht an der
Kastenwandung 42 anstößt, wenn die Verriegelung sich löst. Demgemäß kann die Feder 30 den
Schieber ein kleines Stück nach außen drücken,
wodurch verhindert wird, daß die Riegelfortsätze
50 wieder in die Durchbrüche 62 zurückgehen,
wenn der Benutzer die Taste losläßt. Zum Verschließen drückt der Benutzer irgendwo neben
der Taste auf die Frontplatte.

Bei der Entspannung der Arme 56 wird auch die
Taste wieder in ihre Ruheposition zurückgeführt
infolge der zusammenwirkenden Keilflächen.

Riegel 52 und Taste 70 sind ebenfalls Spritzteile
aus thermoplastischem Kunststoff. Da die Arme
56 immer nur ganz kurzzeitig elastisch deformiert
werden, aber weder in der Schließ- noch in der
Offenposition des Schiebers belastet sind, besteht
keine Gefahr der Dauerverformung durch Kaltfluß.

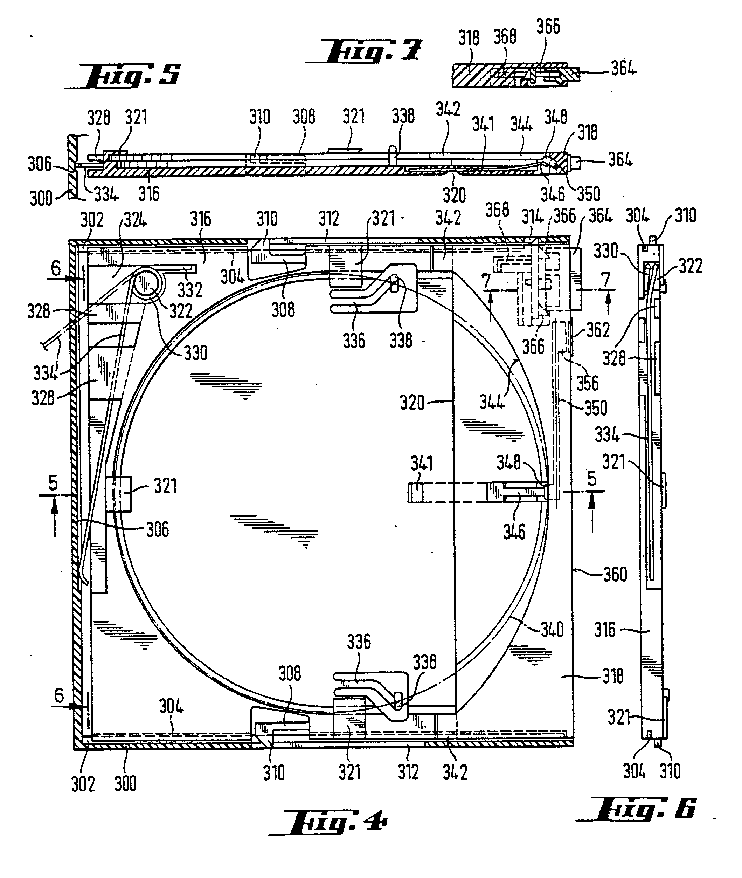

Bei der Ausführungsform nach Fig. 3 ist innerhalb des Riegelkastens 126 ein Riegel 152 senkrecht zur Schieberbewegungsrichtung gleitbeweglich aufgenommen. Die Unterkante 180 des
Riegels ruht auf der Schieberbodenplatte 122,
seine Oberkante 182 wird längs eines an die
Kastenwandung 142 angeformten Steges 184 geführt. An einem Ende (links in Fig. 3) weist der
Riegel 152 einen angeformten Federarm 156 mit
Endfinger 158 auf, der nach dem Zusammenbau
sich in der Ecke zwischen Kastenwandung 144
und 140 innen abstützt. Von der Unterkante 180
des Riegels springt ein Riegelfortsatz 150 nach
unten vor, greift durch einen Durchbruch 148 der
Bodenplatte 122, und in der Schließposition arretiert er sich in einem Durchbruch 162 der Gehäusebodenwand 114.

Beim Einschieben des Schiebers 120 gleitet die
Abschrägung 164 des Riegelfortsatzes 150 auf
eine komplementäre Schräge 186 der Gehäusefrontkante 166 auf. Dabei wird der Riegel im
Bereich zweier Verbindungsarme 188 so deformiert, daß der Riegelfortsatz über die Gehäusebodenwand 114 gleiten kann, bis der Fortsatz unter
Entspannung dieser Arme 188 in den Durchbruch
162 einfällt.

Wird der Riegel 152 unter elastischer Deformation des Armes 156 seitlich verlagert (also nach links in Fig. 3), so gelangt der Fortsatz 150 in Ausfluchtung mit einem Schlitz 190, der sich von der Frontkante 166 der Gehäusebodenwand 114 unmittelbar neben deren Schräge 186 bis in den Durchbruch 162 erstreckt. Die Ausschubfeder des Schiebers (in Fig. 3 nicht gezeichnet) kann dann den ausgelösten Schieber nach außen drücken, wobei der Fortsatz 150 längs des Schlitzes 190 geführt ist. Nach Passieren der Frontkante 166 ist der Arm 156 wieder entlastet und drückt den Riegel in die Ausgangsposition zurück.

Auf der der Frontplatte 146 zugewandten Seite des Riegels, jeweils beidseits der Verbindungsarme 188, sind an den Riegel Paare von Keilen 192 angeformt. Jedem Keilpaar ist eine Taste 170 zugeordnet, geführt in einem zugeordneten Durchbruch 168 und abgestützt mittels Flanschen 172. Die Tasten sind hohl (nur bei einer Taste in der Zeichnung angedeutet), und jeweils eine Kante 194 der Ausnehmung und eine äußere Kante 196 jeder Taste wirkt mit je einem Keil des zugeordneten Keilpaares 192 derart zusammen, daß bei Druck auf die Taste der Riegel 152 seitlich verlagert wird. Die Abmessungen sind dabei so getroffen, daß die Funktion beim Auslösen der nach Fig. 1 und 2 entspricht. Das wird nicht behindert durch den Durchbruch 148, weil dieser entsprechend verbreitert ist.

Auf diese Weise kann man also mit einer Mehrzahl von Tasten ein- und denselben Riegel auslösen. Dies ist dann vorgesehen, wenn die Tasten noch eine weitere Funktion zu erfüllen haben. Beispielsweise kann die Vorrichtung dazu dienen, in nur einem Schieber eine Mehrzahl von Transportplatten für je einen Datenträger, z. B. eine Compactdisc, unterzubringen, die mittels der Tasten anwählbar sind, so daß der Schieber immer nur eine der Transportplatten mitnimmt, während die anderen im Gehäuse zurückgehalten werden. Da diese Funktion nicht Gegenstand der vorliegenden Erfindung ist, wurde dies nicht gezeichnet ; es genügt, auf die EP-A-0 134 278 zu verweisen.

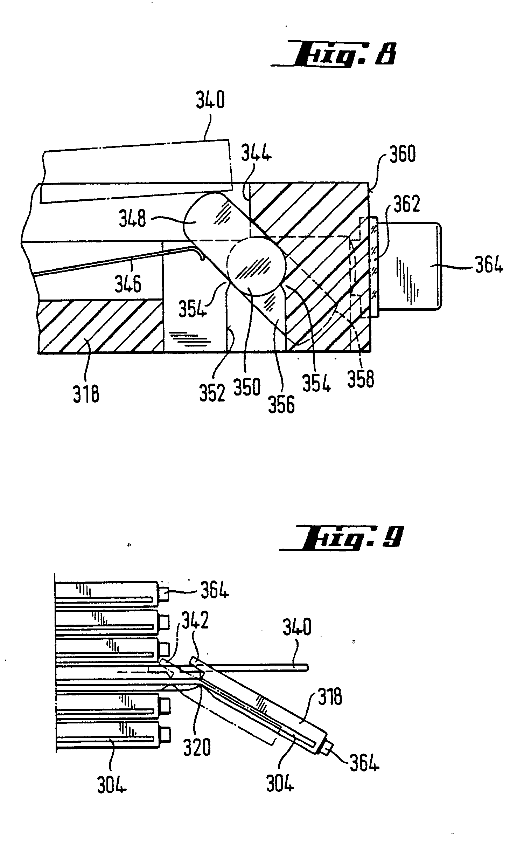

Fig. 4 bis 9 zeigen eine Ausführungsform, bei der je ein Schieber (nachfolgend « Halter » genannt) für je eine Compactdisk vorgesehen ist.

Eine bestimmte Anzahl von Diskhaltern ist in einem gemeinsamen Gehäuse 300 untergebracht. Das Gehäuse besitzt innen an die Seitenwandungen angeformte Führungsstege 302, die in entsprechende Führungsnuten 304 der einzelnen Diskhalter eingreifen, sowie in die der Gehäuseöffnung zugekehrte Innenseite der Rückwand eingetiefte Federarm-Nuten 306. Die im wesentlichen plattenförmigen Diskhalter weisen seitlich angeformte, nach innen federnd auslenkbare Arme 308 auf, an deren freien Enden hakenförmige Anschlagfortsätze 310 sitzen, die in zugeordnete seitliche Durchbrüche 312 der Gehäuseseitenwandungen greifen. Beim erstmaligen Einschub (Montage) der Halter in das Gehäuse weichen die Haken nach innen aus. Schließlich besitzt das Gehäuse noch je einen Durchbruch 314 für jeden Halter, für jeweils benachbarte Halter abwechselnd in der einen oder anderen Seitenwandung.

Diese Durchbrüche dienen als Fallen für die Verriegelung der Halter.

Die Diskhalter umfassen jeweils ein plattenförmiges, wannenartig eingetieftes Hauptteil 316 sowie eine Frontwandbaugruppe 318, die mit dem Hauptteil über ein sogenanntes Filmgelenk 320 gelenkig verbunden ist. Die eingetiefte Wanne des Hauptteils wird von drei Niederhaltern 321 übergriffen. Im hinteren Bereich, außerhalb der Wanne, ist in einer Ecke des Hauptteils ein Sockel 322 angeformt, der in einer Vertiefung 324 des Hauptteils sitzt, die wiederum von zwei Stützfortsätzen 328 übergriffen ist ; in deren Bereich ist der Boden der Eintiefung aus spritztechnischen Gründen ausgenommen. Auf dem Sockel 322 sitzt der Curl 330 einer Schenkelhalsfeder, deren einer Arm 332 in einer Ausnehmung des Halterhauptteils festgelegt ist, während sich der andere Arm 334 in der entspannten Position (gestrichelt in Fig. 4 angedeutet) nach schräg hinten erstreckt. Die Feder ist dabei so gebogen, daß dieser Arm 334 sich in der Ebene des Halters befindet, was durch die mit dem Boden der Vertiefung zusammenwirkenden Stützfortsätze 328 sichergestellt ist. Das freie Ende des Federarms 334 ist etwas abgerundet. Bei der Montage trifft diese Abrundung in die zugeordnete Nut 306 des Gehäuses, wodurch der Halter in Ausschubrichtung vorgespannt wird, weil die Feder belastet ist (in diesem Zustand ist die Feder mit ausgezogenen Linien dargestellt).

Im Bereich der eingetieften Wanne weist der Halterhauptteil schließlich noch zwei Durchbrüche auf, in denen in der Halterebene federnd auslenkbare Zungen 336 stehenbleiben, deren freie Enden nach oben abgewinkelt und nach innen umgelegt sind. Diese Zungen legen sich mit dem abgewinkelten Abschnitt 338 seitlich an die Disk 340 an, wenn diese vollständig in den Halter eingeschoben ist. Dadurch wird erreicht, daß bei Ausstoß der Halters aus dem Gehäuse unter der Wirkung der Feder 330/334 die Disk gebremst wird, so daß sie nicht herauskatapultiert wird, und bei Verwendung des Behälters im Kraftfahrzeug Vibrationen der Disk in ihrem Halter gedämpft werden. Beim Einschieben einer Disk sorgen die Zungen ferner dafür, daß die Disk zuverlässig bis in ihre Endlage gelangt, so daß dann auch die Frontwandbaugruppe hochgeklappt werden kann, und der Benutzer spürt die Überwindung der Bremskraft der Zungen deutlich, so daß er gewiß sein kann, daß die Disk 340 sicher verstaut ist. Die einwärts abgekröpften Enden der Zungen übergreifen dabei die Disk und stellen sicher, daß die Zungen nicht unter die Disk geraten können.

Besondere Ausführungen der Bremsorgane sind in den Ansprüchen 14-16 angegeben.

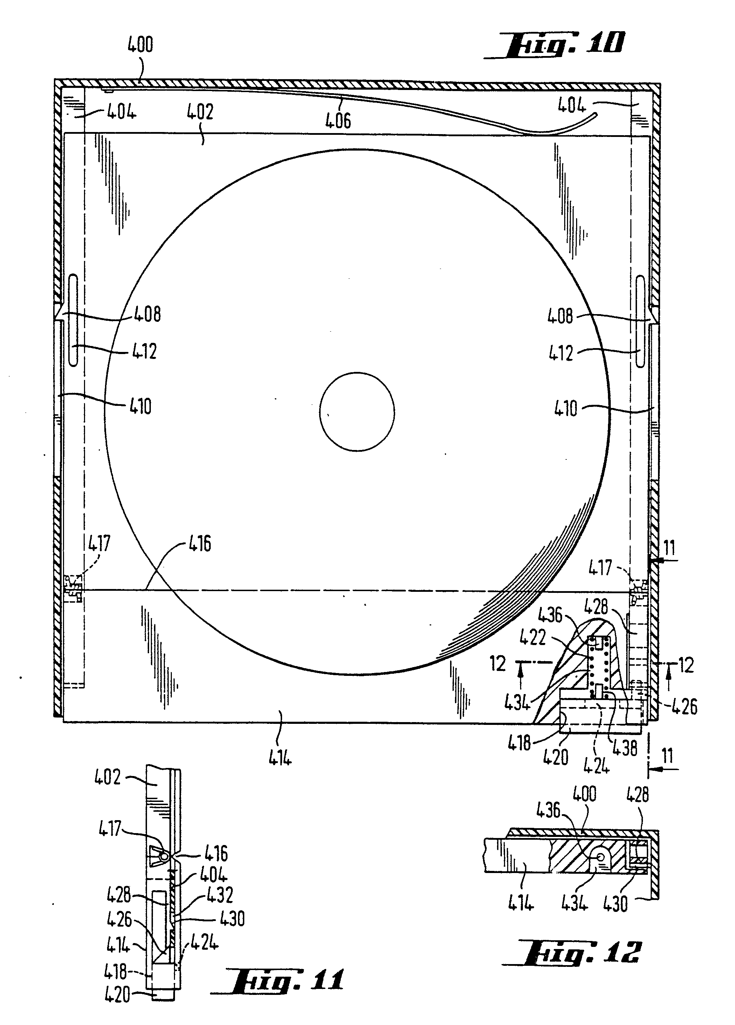

In der Mitte des Filmgelenks 320 ist eine das Gelenk überbrückende Blattfeder 341 in entsprechende Ausnehmungen des Hauptteils und der Frontwandbaugruppe eingesetzt. Die Blattfeder übt auf die Frontwandbaugruppe eine Vorspannung in Richtung deren abgeklappter Position aus und bildet zugleich den Anschlag zur Begrenzung dieser Abklappbewegung. Im Bereich der seitlichen Enden des Filmgelenks erstreckt sich die Frontwandbaugruppe nocht mit zwei Fortsätzen 342 in entsprechende Ausschnitte des Hauptteils. Bei abgeklappter Frontwandbaugruppe sperren diese Fortsätze den Einschub des Hälters durch Auflaufen auf die Frontwand des jeweils darüber befindlichen Halters bzw., beim obersten Halter, auf die Gehäusedeckwand. Ohne diese Maßnahme bestünde die Möglichkeit, daß der Benutzer versucht, durch Druck auf die freiliegende Kante der Disk den Halter einzuschieben, und die dann hochklappende Frontwandbaugruppe könnte die Finger klemmen. Die Sperrwirkung ist in Fig. 9 strichpunktiert angedeutet. — Die Frontwandbaugruppe verlängert das Hauptteil nach vorn, indem sowohl die Eintiefung sich in die Frontwandbaugruppe erstreckt als auch die Führungsnuten sich im verbleibenden dickeren Teil der Frontwandbaugruppe fortsetzen. Die Kontur der Eintiefung ist mit 344 angedeutet.

Ein sehr schmaler Endstreifen 346 (Fig. 8) der Blattfeder 341 ist etwas nach oben abgekröpft und ragt bis unter einen Tastarm 348 am einen Ende eines Schwenkhebels 350, dessen Welle drehbar am Grund einer langgestreckten Einsenkung 352 gelagert ist. Die Einsenkung erstreckt sich von der Unterseite der Frontwandbaugruppe her parallel zur Frontwand über etwa deren halbe Breite, und sie weist nahe ihrem Grund Verengungen 354 auf, so daß die Hebelwelle, einmal eingeschnappt, nicht mehr herausfallen kann. Am anderen Ende des Hebels erstreckt sich, um 180° bezüglich des Tastarms versetzt, ein Anzeigearm 356.

Die Stirnfläche 358 dieses Arms 356 ist eingefärbt oder mit irgendeiner anderen Markierung versehen, die durch ein in die Stirnwandfront 360 eingefügtes Fenster 362 erkennbar ist. Wird nun eine Disk in den Halter eingelegt, so drückt ihre Kante auf den Tastarm 348 unter Auslenkung des Federendstreifens 346, und durch dieses Verschwenken des Hebels 350 erscheint die erwähnte Stirnfläche 358 hinter dem Fenster, womit signalisiert wird, daß der betreffende Halter belegt ist. Im anderen Falle wird der Hebel durch den Endstreifen 346 in die andere Anzeigeposition zurückgedreht.

Zwischen dem Fenster und der Gehäuseseitenwandung erstreckt sich eine Auslösetaste 364 durch die Stirnwandfront 360 und ist senkrecht zu dieser durch Fingerdruck verlagerbar. Dabei drückt sie auf zwei Keile 366, angeformt an einen parallel zur Front 360 verschieblichen Hebel, der von einem ebenfalls angeformten Federarm 368 in die in Fig. 4 erkennbare Schließlage vorgespannt ist.

Wie in Fig. 7 erkennbar ist, wird die Taste von vorn, der Riegel von unten in die Frontwandbaugruppe eingesetzt ; die Fortsätze an den Teilen, die ein Einschnappen ermöglichen, sind hier nicht im einzelnen dargestellt.

Sowohl die Belegtanzeige als auch die Auslösetaste mit zugehörigem Riegel sind bei benachbarten Haltern abwechseind rechts und links, gesehen auf die Front 360, angeordnet, um trotz der relativ geringen Abmessungen in Höhenrichtung eine bequeme Bedienung zu ermöglichen.

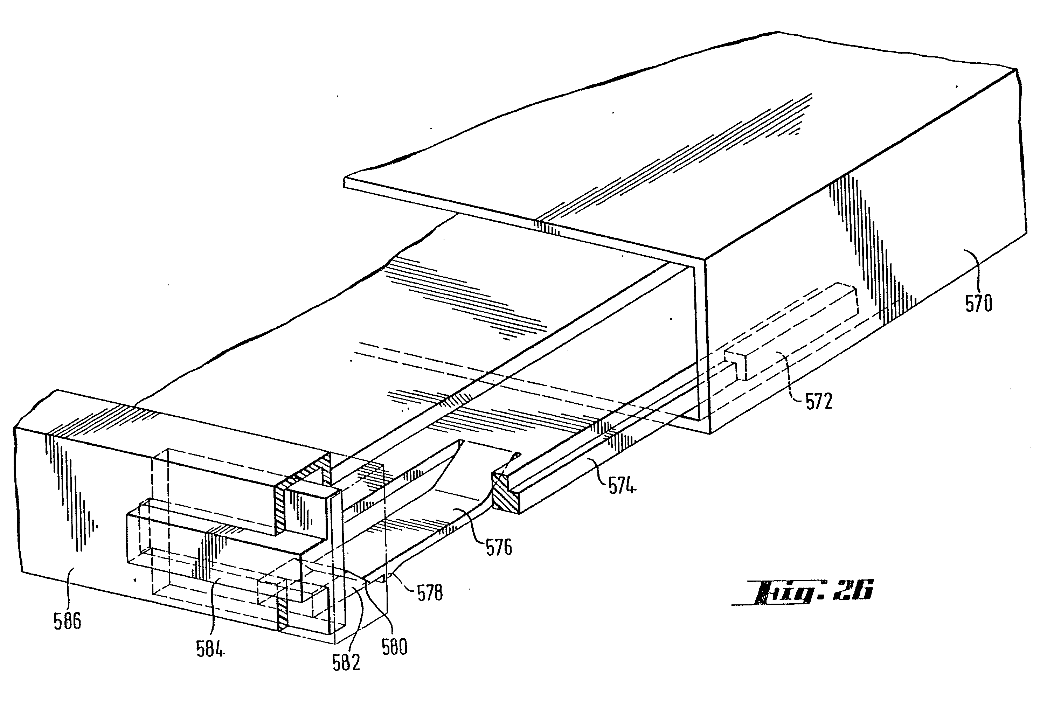

Während die Vorrichtung nach Fig. 4 bis 9 sehr detailliert dargestellt und beschrieben wurde, sind die Ausführungsformen nach Fig. 10 bis 26 weitgehend schematisiert und auf das für die Erfindung Wesentliche beschränkt.

Fig. 10 bis 12 beziehen sich auf eine Vorrichtung zur Aufbewahrung von Compactdisks. In einem Gehäuse 400 sind als Halter 402 ausgebildete Schieberteile längs an die Innenseite der Gehäuseseitenwände angeformten Schienen 404 geführt, welche in entsprechende seitliche Nuten der Halter eingreifen. Die Ausschubfederanordnung ist hier als Blattfeder 406 ausgebildet, und der Ausschubweg der Halter wird durch Anschlaghaken 408 begrenzt, die in Gehäuseseitenschlitze 410 greifen und beim erstmaligen Einschub des Halters dank dahinterliegender Ausnehmungen 412 einwärts ausfedern können. An den Schieberhauptteil ist eine Frontwandbaugruppe 414 mittels eines Filmgelenks 416 angelenkt und wird von zwei Schenkelhalsfedern 417 in die Abklappposition vorgespannt. Seitlich weist die Frontwandbaugruppe eine sich nach außen öffnende Führung 418 für eine Taste 420 auf, die von einer Schraubenfeder 422 nach außen vorgespannt ist und mittels eines angeformten Anschlags 424 gegen Herausfallen gesichert ist. Im Ruhezustand (wie dargestellt) liegt die Schneide eines an die Taste angeformten Keils 426 vor einer komplementären Schräge einer aus der Frontwandbaugruppe ausgeformten Blattfeder 428, die einen Teil des über der Führungsnut stehenden Steges ist und auf ihrer dem entsprechenden Abschnitt der zugehörigen Führungsschiene zugekehrten Seite einen Haken 430 angeformt hat, der in eine entsprechende Durchbrechung der Schiene greift, die mit 432 bezeichnet ist. Die Schraubenfeder 422 ist durch eine bodenseitige Öffnung 434 eingesetzt und hält sich auf angeformten Stiften 436 an der Frontwandbaugruppe bzw. 438 an der Taste.

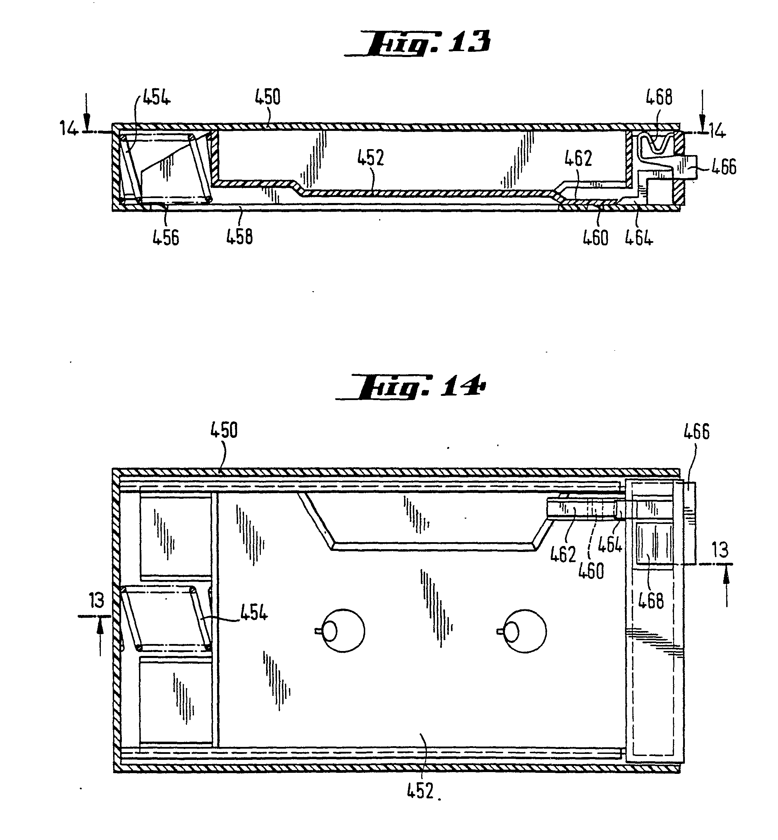

Die Vorrichtung nach Fig. 13 und 14 dient zur Aufbewahrung von Compactkassetten. In einem Gehäuseteil 450 ist gleitbeweglich ein Transportschieberteil 452 geführt, das von einer Schraubenfeder 454 in Ausschubrichtung vorgespannt ist. Der Ausschubweg wird durch die Anschläge 456 begrenzt, die in Bodenschlitzen 458 des Gehäuseteils laufen. Die Verriegelung des Schieberteils erfolgt durch einen Haken 460, der bodenseitig an eine aus dem Schieberboden ausgestellte Blattfeder 462 angeformt ist und von einem Keil 464 aushebbar ist, der einen Teil einer Taste 466 bildet. Diese Taste ist ebenfalls einstückig mit dem Schieber im Spritzgußverfahren gefertigt, jedoch derart, daß sie gegenüber dem Schieberkörper beweglich ist, indem sie mit diesem über elastisch deformierbare Zwischenstücke 468 verbunden ist. Die Zwischenstücke liegen in der Draufsicht (Fig. 14) neben dem Keil, und man erkennt, daß das Spritzwerkzeug nicht sehr kompliziert sein muß.

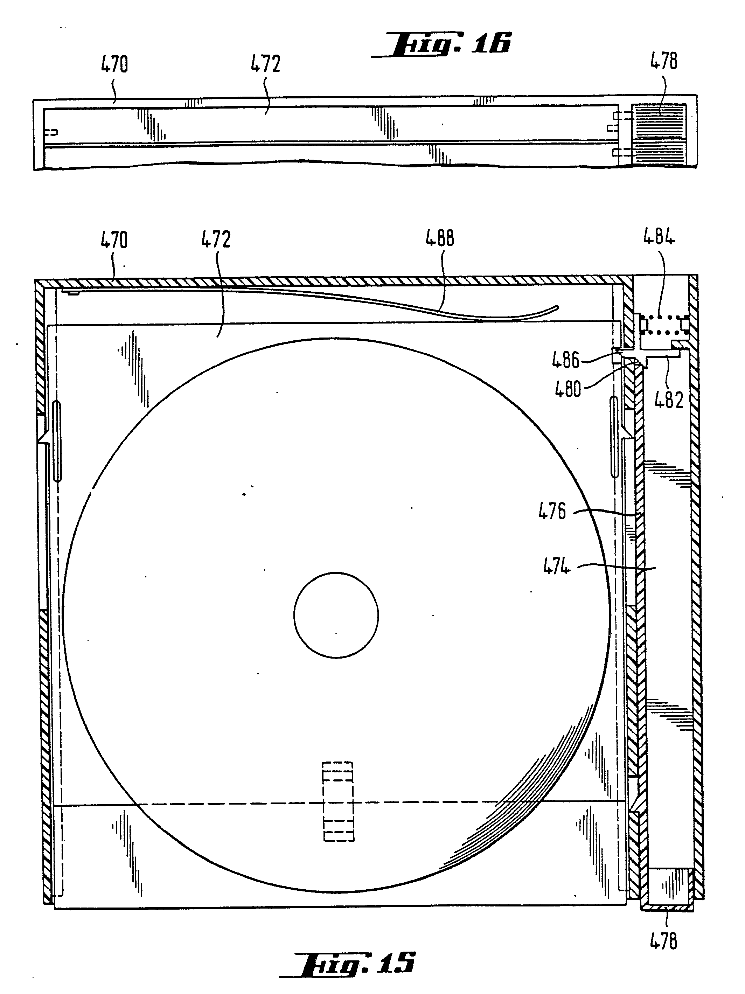

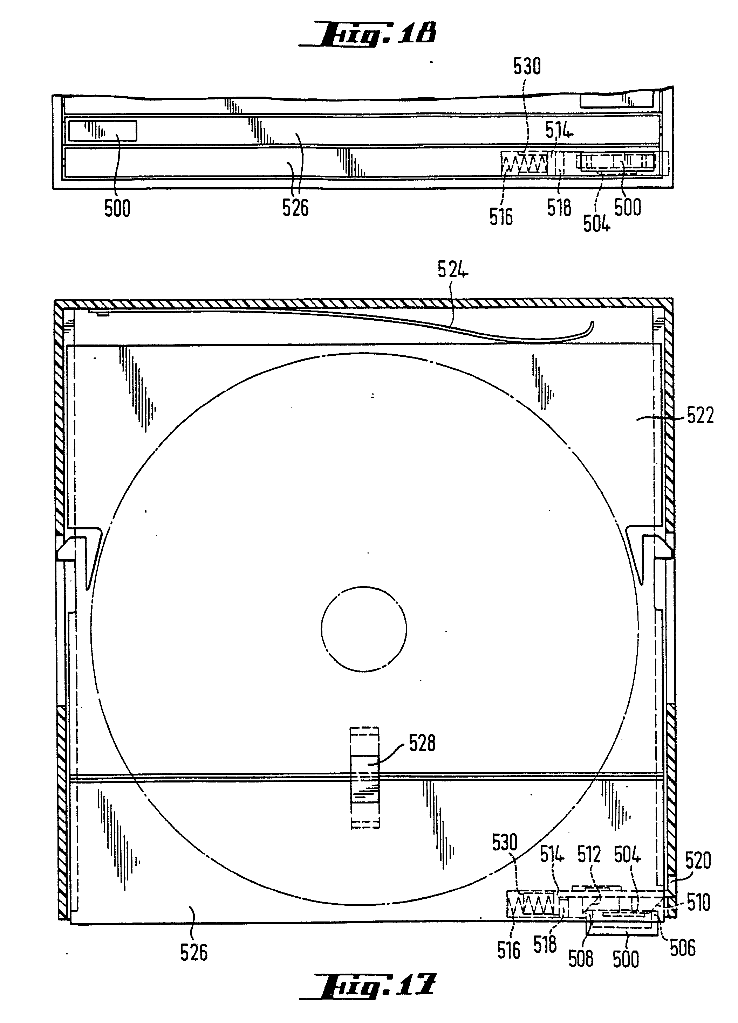

Bei der Ausführungsform nach Fig. 15 und 16

ist neben dem im Gehäuseteil 470 geradegeführten, als plattenartiger Halter 472 ausgebildeten Transportschieber für eine Compactdisk ein Kanal 474 im Gehäuseteil ausgebildet, in dem ein Stößel 476 mit einer Taste 478 verschieblich ist. Das innere Ende des Stößels läuft bei Druck auf die Taste auf eine Keilfläche 480 eines Riegels 482 auf und verlagert diesen dadurch in Querrichtung gegen die Vorspannung einer Schraubendruckfeder 484. Dadurch kommt der Riegel aus einem Einschnitt 486 des Halters 472 frei, so daß dieser von der Blattfeder 488 ausgeschoben werden kann.

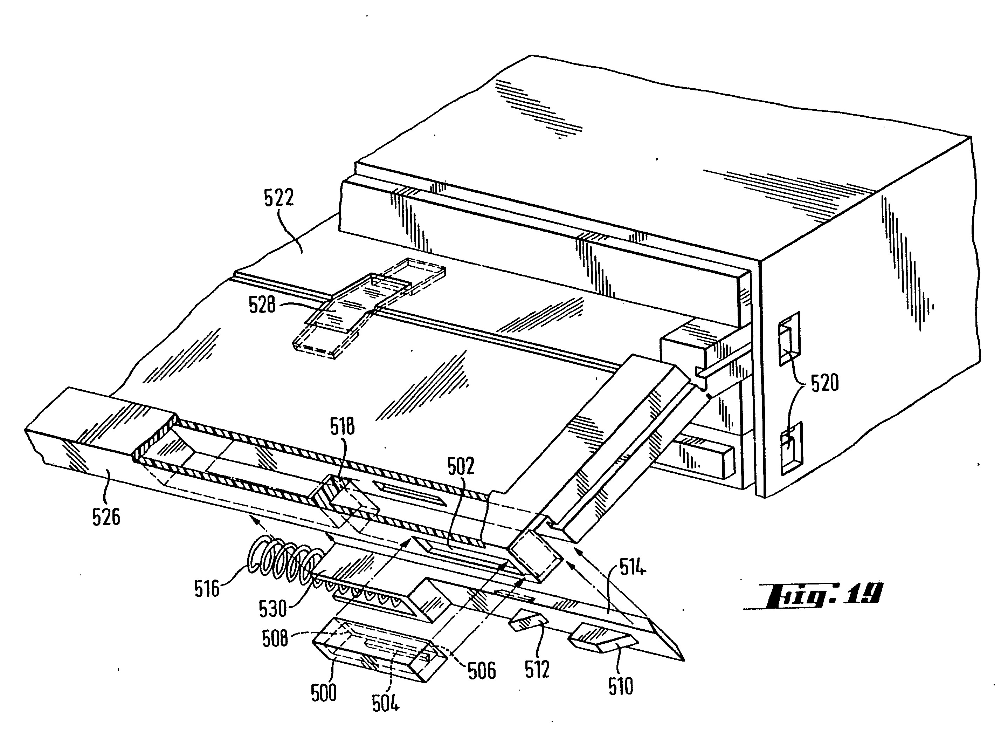

Die Ausführungsform nach Fig. 17 bis 19 ist ähnlich der nach Fig. 10 bis 12, indem die Taste 500 in der Frontwandbaugruppe in einer Ausnehmung 502 geführt und durch einen angeformten Anschlag 504 gegen Herausfallen gesichert ist. Die Taste wirkt mit ihren Kanten 506, 508 auf entsprechende Keilflächen 510, 512 eines quer zur Tastenbewegungrichtung verschieblichen Riegels 514, der von einer Schraubenfeder 516 gegen einen Anschlag 518 gedrückt wird, und hebt dabei den Riegel aus einem entsprechenden Einschnitt 520 der Gehäuseseitenwand. Der Diskhalter 522 kann dann von einer Blattfeder 524 ausgeschoben werden, und die Frontwandbaugruppe 526 kann unter der Wirkung einer Blattfeder 528 wegkippen. — Der Riegel wird in einen nach unten offenen Kanal eingesetzt und dann nach Einsetzen der Taste. — wobei die Teile sich elastisch verformen, so daß die Taste einrasten kann — in seiner Lager gehalten. Die Feder 516 wird von einem Fortsatz 530 des Riegels gegen Herausfallen gesichert. Diese Bauart der Verriegelung kann « gewendet » und auf der anderen Seite des Halters eingebaut werden, wie in Fig. 18 angedeutet ; dies erleichtert die Betätigung durch den Benutzer, weil trotz der geringen Höhe der einzelnen Schieberteile jede Taste weit genug von den nächstbenachbarte auf derselben Seite des Gehäuses entfernt liet, um eine versehentliche Auslösung von zwei Schieberteilen mit einem Finger zu vermeiden.

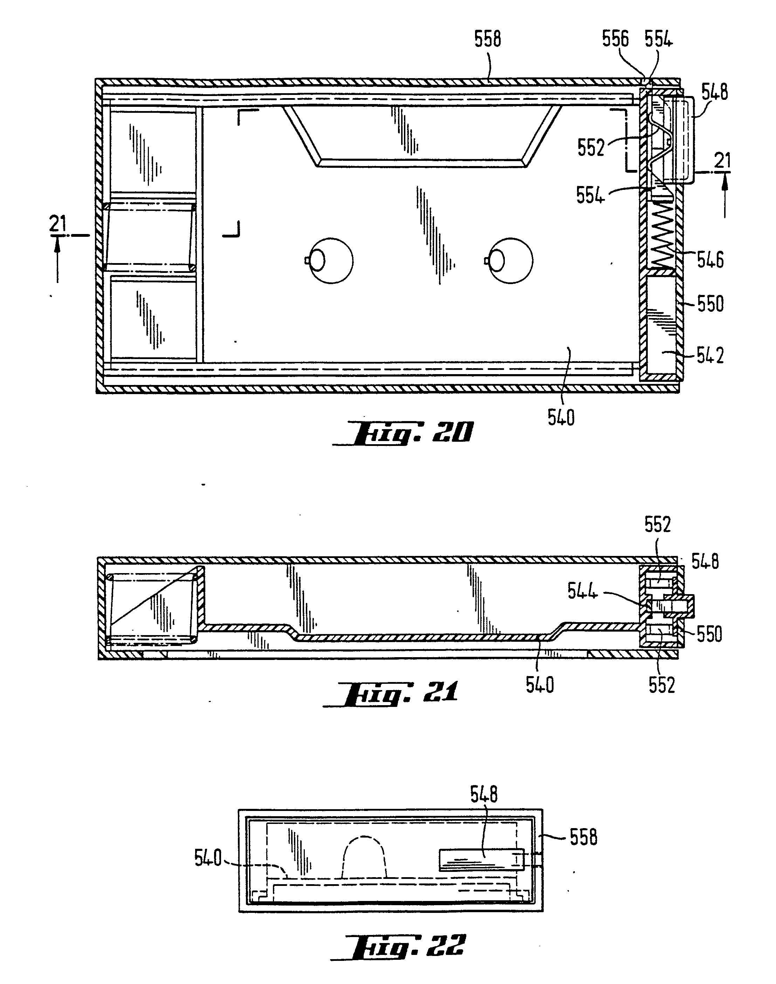

Die Ausführungsformen nach Fig. 20 bis 26 sind wieder für Compactkassetten ausgelegt.

Bei der Variante nach Fig. 20 bis 22 ist der Frontbereich des Schieberteils 540 doppelwandig ausgeführt, wobei der Hohlraum 542 das Kupplungsorgan in Form des Riegels 544 mit Vorspann-Schraubenfeder 546 sowie Taste 548 aufnimmt, deren Betätigungsseite durch einen Durchbruch einer auf das Schieberteil aufgesetzten Abdeckplatte 550 ragt, die z. B. durch Ultraschallschweißung befestigt wird. Die Taste hat ein eigenes Vorspannsystem, bestehend aus zwei etwa V-förmig gebogenen Blattfederchen 552. Der Riegel greift mit einem Riegelfortsatz 554 in eine Falle 556 der Gehäuseteilseitenwand 558 und wird — ähnlich wie in Fig. 17 bis 19 — über seine Keilflächen entriegelt, wenn die Taste auf diese einwirkt.

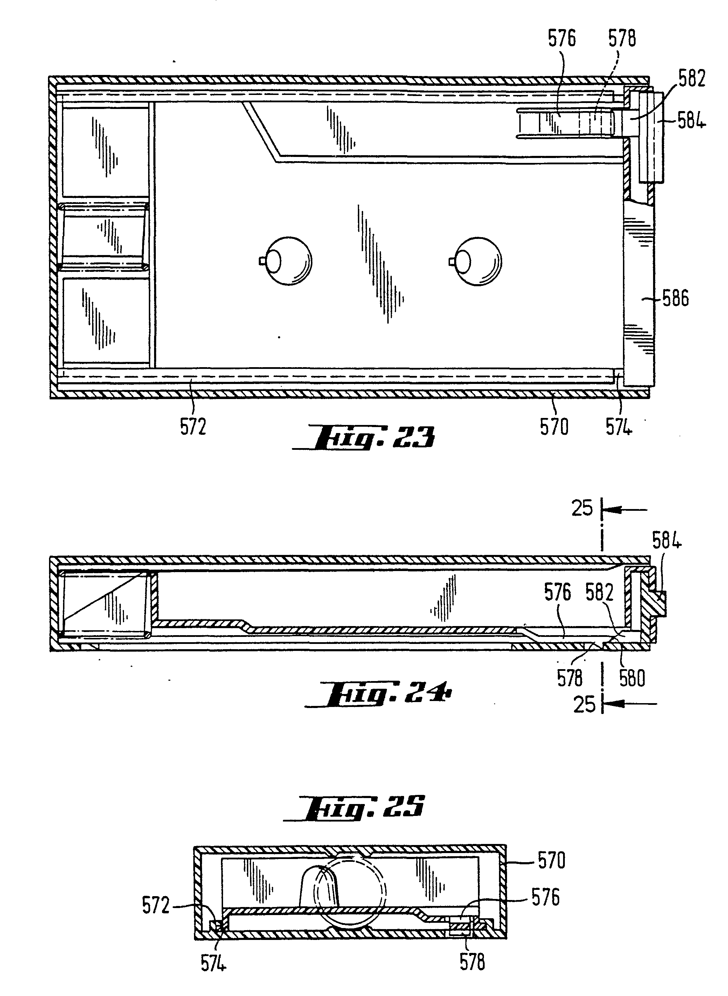

Bei der Ausführungsform nach Fig. 23 bis 26 ist in einem Gehäuseteil 570 mit angeformten Führungsschienen 572 der Transportschieber 574 gleitbeweglich aufgenommen. Aus dem Schieberboden ist eine Blattfederzunge 576 mit angeformtem Haken 578 ausgeschnitten, an deren Keilfläche 580 der Auslösekeil 582 einer Taste 584 angreift. Die Taste ist in der doppelwandig ausgebildeten Schieberfront 586 aufgenommen und geführt ; sie kann von unten unter Auslenkung der Zunge 576 und elastischer Deformation der äußeren Wand eingesetzt werden.

## Patentansprüche

1. Vorrichtung zum Aufbewahren von Aufzeichnungsträgern, wie Magnetbandkassetten, Disketten, Schall- oder Bildplatten, mit
— einem im wesentlichen rechteckigen Gehäuseteil (10),
— einem im Gehäuseteil geführten und zur Aufnahme der Aufzeichnungsträger ausgebildeten Transportschieberteil (20), das die Aufzeichnungsträger aus einer Aufbewahrungsposition, in der sie im Gehäuseteil eingeschlossen sind, in eine Entnahmeposition fördert, in der sie bequem erfaßbar sind,
— einer Federanordnung (30), die das Transportschieberteil in die äußere Entnahmeposition vorspannt, und
— einer Verriegelungsanordnung, die in der Aufbewahrungsposition des Transportschieberteils formschlüssig ineinandergreifende Elemente umfaßt, durch Einschieben des Transportschieberteils aus seiner Entnahmeposition selbsttätig verriegelbar ist und mindestens ein Kupplungsorgan (52, 152) umfaßt, das relativ zu einem der zu verriegelnden Teile verlagerbar, jedoch in Schieberteilbewegungsrichtung abgestützt ist, dadurch gekennzeichnet, daß an einem der Teile (20, 120) ein in Schieberteileinschubrichtung gegen Federvorspannung beweglich geführtes, das Kupplungsorgan (52, 152) entriegelndes Auslöseorgan (70, 170) vorgesehen ist.

2. Vorrichtung nach Anspruch 1, dadurch gekennzeichnet, daß der durch Anschläge begrenzte Bewegungshub des Auslöseorgans größer bemessen ist als zum Entriegeln des Kupplungsorgans erforderlich.

3. Vorrichtung nach Anspruch 1 oder 2, dadurch gekennzeichnet, daß das Kupplungsorgan und das Auslöseorgan gemeinsam in Transportschieberteil untergebracht sind.

4. Vorrichtung nach einem der Ansprüche 1 bis 3, dadurch gekennzeichnet, daß dem Kupplungsorgan mehrere Auslöseorgane zugeordnet sind.

5. Vorrichtung nach einem der Ansprüche 1 bis 4, dadurch gekennzeichnet, daß dem Kupplungsorgan eine eigene Vorspannfeder (56, 156) zugeordnet ist, mittels der es in die Verriegelungsposition vorgespannt ist.

6. Vorrichtung nach Anspruch 5, dadurch gekennzeichnet, daß die Vorspannfeder des Kupplungsorgans zugleich die Federvorspannung für das Auslöseorgan aufbringt.

7. Vorrichtung nach einem der Ansprüche 1 bis 6, dadurch gekennzeichnet, daß die Masse des Auslöseorgans und seine Federvorspannkraft derart bemessen sind, daß eine ungewollte Auslösung infolge Trägheitskräften erst bei einer vorgegebenen Beschleunigung der Vorrichtung in Schieberteilausschubrichtung erfolgen kann.

8. Vorrichtung nach Anspruch 1 zum Aufbewahren von Compactdisks, dadurch gekennzeichnet, daß jeder Transportschieberteil eine Frontwandbaugruppe (318) aufweist, die um eine quer zu seiner Bewegungsrichtung verlaufende Achse (320) gegenüber einem Schieberhauptteil wegschwenkbar ist, so daß die Disk in der Entnahmeposition an ihren einander abgewandten Hauptflächen zangenartig erfaßbar ist.

9. Vorrichtung nach Anspruch 8, dadurch gekennzeichnet, daß für jede Disk ein eigener Transportschieberteil vorgesehen ist, der soweit aus dem Gehäuseteil ausschiebbar ist, daß ein als Einlege-Leitelement ausreichender Abschnitt des Schieberhauptteils aus dem Gehäuseteil herausragt.

10. Vorrichtung nach Anspruch 9, dadurch gekennzeichnet, daß an dem Schieberhauptteil an die Kante einer eingelegten Disk im Bereich von deren der Frontwandbaugruppe zugewandter Hälfte sich anlegende Bremsorgane (336) in einem Abstand voneinander angeordnet sind, der kleiner ist als der Diskdurchmesser, und die derart voneinanderweg federnd auslenkbar sind, daß sie beim Einschieben einer Disk bis zu einem Abstand voneinander gleich dem Diskdurchmesser ausweichen.

11. Vorrichtung nach Anspruch 8, dadurch gekennzeichnet, daß die Vorspannfederanordnung für jeden Transportschieberteil eine Schenkelhalsfeder umfaßt, deren Curl (330) und ein Schenkel (332) im Schieberhauptteil aufgenommen sind, während das freie Ende des anderen Schenkels (334) in eine zugeordnete in einer Schieberhauptebene liegende Nut (306) in der Gehäuseteilrückwand greift.

12. Vorrichtung nach Anspruch 8 mit einer Anzeigeeinrichtung für den Belegungszustand des Transportschieberteils, umfassend einen schwenkbaren Taster (348), der sich bei Verschwenken der Frontwandbaugruppe in die Einschubposition an die Fläche einer eingelegten Disk unter Federvorspannung anlegt und dabei ein Anzeigeorgan (356) verlagert, dadurch gekennzeichnet, daß der Taster und das Anzeigeorgan als Arme eines zweiarmigen Hebels (350) ausgebildet sind, der drehbar in der Frontwandbaugruppe gelagert ist.

13. Vorrichtung nach Anspruch 12, dadurch gekennzeichnet, daß die Frontwandbaugruppe gegenüber dem Schieberhauptteil mittels einer im Bereich ihrer Achse angeordneten Blattfeder (341) in die weggeschwenkte Lage vorgespannt ist, und daß die Blattfeder eine Verlängerung (346) aufweist, die die Federvorspannung für den Taster liefert.

14. Vorrichtung nach Anspruch 10, dadurch gekennzeichnet, daß die Bremsorgane einstückig an den aus Kunststoff gespritzten Schieberhauptteil angeformt sind.

15. Vorrichtung nach Anspruch 10, dadurch gekennzeichnet, daß der Winkel mit dem Scheitel im Mittelpunkt einer eingelegten Disk und mit den Schenkeln durch die Berührungspunkte der Bremsorgane mit der Diskkante verlaufend kleiner als 160° und größer als 90° ist.

16. Vorrichtung nach Anspruch 15, dadurch gekennzeichnet, daß der Winkel etwa 140° beträgt.

17. Vorrichtung nach Anspruch 1, dadurch gekennzeichnet, daß das Kupplungsorgan (460) mit einem der Teile einstückig ausgebildet und relativ zu diesem elastisch verlagerbar ist.

18. Vorrichtung nach Anspruch 1, dadurch gekennzeichnet, daß das Auslöseorgan (464) mit einem der Teile einstückig ausgebildet ist und mit diesem über elastische Zwischenstücke (468) verbunden ist.

19. Vorrichtung nach Anspruch 1, dadurch gekennzeichnet, daß das Auslöseorgan (482) und das Kupplungsorgan (476) in dem Gehäuseteil angeordnet sind.

20. Vorrichtung nach Anspruch 1, dadurch gekennzeichnet, daß das Kupplungsorgan und das Auslöseorgan von Gehäuseteil und Transportschieberteil getrennt gefertigt und in jene eingesetzt sind.

21. Vorrichtung nach Anspruch 20, dadurch gekennzeichnet, daß jedem der Organe eine eigene Vorspannfeder zugeordnet ist.

22. Vorrichtung nach Anspruch 21, gekennzeichnet durch metallische Vorspannfedern.

23. Vorrichtung nach Anspruch 21, dadurch gekennzeichnet, daß mindestens eine der Vorspannfedern einstückig an das aus Kunststoff gespritzte entsprechende Organ angeformt ist.

24. Vorrichtung nach Anspruch 20, dadurch gekennzeichnet, daß beiden Organen eine gemeinsame Vorspannfeder zugeordnet ist und die beiden Organe mechanisch miteinander gekuppelt sind.

25. Vorrichtung nach Anspruch 1, dadurch gekennzeichnet, daß eines der Organe mit einem der Teile einstückig aus Kunststoff gespritzt ist und die Verbindung zwischen beiden als Vorspannfeder für das Organ ausgebildet ist.

26. Vorrichtung nach Anspruch 25, dadurch gekennzeichnet, daß das andere Organ von dem Gehäuseteil und dem Transportschieberteil getrennt gefertigt und in eines von ihnen eingesetzt ist.

27. Vorrichtung nach Anspruch 1, dadurch gekennzeichnet, daß die beiden Organe über Keilführungen miteinander mechanisch gekuppelt sind.

28. Vorrichtung nach Anspruch 1, dadurch gekennzeichnet, daß as Kupplungsorgan -parallel zur Hauptebene des aufzubewahrenden Aufzeichnungsträgers verlagerbar ist.

29. Vorrichtung nach Anspruch 1, dadurch gekennzeichnet, daß das Kupplungsorgan senkrecht zur Hauptebene des aufzubewahrenden Aufzeichnungsträgers verlagerbar ist.

30. Vorrichtung nach Anspruch 28, dadurch gekennzeichnet, daß das Kupplungsorgan in eine Gehäuseteil-Seitenwandung einrastend ausgebildet und angeordnet ist.

31. Vorrichtung nach Anspruch 28, dadurch gekennzeichnet, daß das Kupplungsorgan in das Transportschieberteil einrastend ausgebildet und angeordnet ist.

32. Vorrichtung nach Anspruch 29, dadurch gekennzeichnet, daß das Kupplungsorgan in eine Gehäusebodenwandung einrastend ausgebildet und angeordnet ist.

33. Vorrichtung nach Anspruch 29, dadurch gekennzeichnet, daß das Transportschieberteil längs an Gehäuseteil-Seitenwandungen angeformten Schienen (404) geführt ist und daß das Kupplungsorgan (430) in eine Führungsschiene einrastend ausgebildet und angeordnet ist.

34. Vorrichtung nach Anspruch 33, dadurch gekennzeichnet, daß die Führungsschienen in am Transportschieberteil vorgesehene Führungsschlitze eingreifen und daß das Kupplungsorgan (514) als ausgeschnittener zungenartig geformter Abschnitt eines einen Führungsschlitz begrenzenden Steges ausgebildet ist.

35. Vorrichtung nach Anspruch 1, dadurch gekennzeichnet, daß in einem gemeinsamen Gehäuseteil eine Mehrzahl von Transportschieberteilen zueinander parallel beweglich untergebracht ist.

36. Vorrichtung nach Anspruch 35, dadurch gekennzeichnet, daß die Auslöseorgane zueinander versetzt angeordnet sind.

37. Vorrichtung nach Anspruch 36, dadurch gekennzeichnet, daß die Auslöseorgane alternierend nahe Gehäuseteil-Seitenwänden angeordnet sind.

## Claims

1. Apparatus for storing recording media, such as magnetic tape cassettes, discettes, records or video discs, having
— a substantially rectangular housing part (10),
— a transport slider member part (20) which is guided in the housing part and constructed to receive the recording media, and which conveys the recording media from a storage position in which they are enclosed in the housing part to a removal position in which they can easily be grasped,
— a spring arrangement (30), which biases the transport slider member part into the outer, removal, position, and
— a locking arrangement which comprises elements engaging positively in one another in the storage position of the transport slider member part, can be automatically locked by pushing in the transport slider member part from its removal position, and comprises at least one coupling means (52, 152) which can be displaced relative to one of the parts to be locked, but is supported in the direction of movement of the slider member part,
characterised in that on one of the parts (20, 120) a release means (70, 170) is provided which is guided to be movable, against a spring bias, in the direction in which the slider member part is pushed in, and which unlocks the coupling means (52, 152).

2. Apparatus according to Claim 1, characterised in that the travel, limited by stops, of the release means is greater than is necessary for the unlocking of the coupling means.

3. Apparatus according to Claim 1 or 2, characterised in that the coupling means and the release means are together housed in the transport slider member part.

4. Apparatus according to one of Claims 1 to 3, characterised in that several release means are associated with the coupling means.

5. Apparatus according to one of Claims 1 to 4, characterised in that the coupling means has associated with it its own bias spring (56, 156), by means of which it is biased into the locking position.

6. Apparatus according to Claim 5, characterised in that the bias spring of the coupling means at the same time applies the spring bias for the release means.

7. Apparatus according to one of Claims 1 to 6, characterised in that the mass of the release means and its spring bias force are so calculated that an unintentional release due to inertia forces can only take place at a predetermined acceleration of the apparatus in the ejection direction of the slider member part.

8. Apparatus according to Claim 1 for storing compact discs, characterised in that each transport slider member part has a front wall assembly (318) which can be pivoted away with respect to a main part of the slider member about an axis running at right-angles to its direction of movement, so that the disc in the removal position can be grasped in a pincer-like manner by its principal surfaces facing away from each other.

9. Apparatus according to Claim 8, characterised in that each disc is provided with its own transport slider member part, which can be pushed so far out of the housing part that a portion of the main part of the slider member serving as a guide element for insertion projects out of the housing part.

10. Apparatus according to Claim 9, characterised in that on the main part of the slider member check devices (336) are provided which bear against the edge of an inserted disc in the region of the half of the latter facing towards the front wall assembly, and which are arranged at a distance from each other which is less than the disc diameter, and can be moved resiliently apart from each other in such a way that when a disc is pushed in they yield until they are at a distance from each other that is equal to the disc diameter.

11. Apparatus according to Claim 8, characterised in that the bias spring arrangement for each transport slider member part comprises a coiled spring with projecting ends, the coil (330) and one limb (332) of which are housed in the main part of the slider member, while the free end of the other limb (334) engages in an associated groove (306), lying in a principal plane of the slider member, provided in the rear wall of the housing part.

12. Apparatus according to Claim 8 with an indicating means to show whether the transport slider member part is occupied, comprising a pivotable feeler (348) which when the front wall assembly is pivoted into the insertion position bears against the surface of an inserted disc under spring bias and thereby displaces an indicating member (356), characterized in that the feeler and the indicating member are constructed as the arms of a two-armed level (350) which is rotatably supported in the front wall assembly.

13. Apparatus according to Claim 12, characterised in that the front wall assembly is biased into the position in which it is pivoted away, with respect to the main part of the slider member, by means of a leaf spring (341) arranged in the region of its axis, and that the leaf spring has an extension (346) which supplies the spring bias for the feeler.

14. Apparatus according to Claim 10, characterised in that the check devices are moulded on in one piece with the main part of the slider member injection-moulded from plastics material.

15. Apparatus according to Claim 10, characterised in that the angle with the apex in the centre point of an inserted disc and with the limbs running through the points of contact of the check devices with the edge of the disc is less than 160° and greater than 90°.

16. Apparatus according to Claim 15, characterised in that the angle is approximately 140°.

17. Apparatus according to Claim 1, characterised in that the coupling means (460) is formed in one piece with one of the parts and is resiliently displaceable relative to the latter.

18. Apparatus according to Claim 1, characterised in that the release means (464) is formed in one piece with one of the parts and is connected to the latter by way of resilient intermediate parts (468).

19. Apparatus according to Claim 1, characterised in that the release means (482) and the coupling means (476) are arranged in the housing part.

20. Apparatus according to Claim 1, characterised in that the coupling means and the release means are produced separately from housing part and transport slider member part and are inserted into those parts.

21. Apparatus according to Claim 20, characterised in that each of the means has its own bias spring associated with it.

22. Apparatus according to Claim 21, characterised by metal bias springs.

23. Apparatus according to Claim 21, characterised in that at least one of the bias springs is moulded on in one piece with the corresponding means injection-moulded from plastics material.

24. Apparatus according to Claim 20, characterised in that a common bias spring is associated with both of the means and the two are mechanically coupled to each other.

25. Apparatus according to Claim 1, characterised in that one of the means is injection-moulded in one piece with one of the parts from plastics material and the connection between the two is in the form of a bias spring for the means.

26. Apparatus according to Claim 25, characterised in that the other means is produced separately from the housing part and the transport slider member part and is inserted into one of those parts.

27. Apparatus according to Claim 1, characterised in that the two means are mechanically coupled to each other by means of wedge-like guide elements.

28. Apparatus according to Claim 1, characterised in that the coupling means is displaceable parallel to the principal plane of the recording medium to be stored.

29. Apparatus according to Claim 1, characterised in that the coupling means is displaceable perpendicular to the principal plane of the recording medium to be stored.

30. Apparatus according to Claim 28, characterised in that the coupling means is constructed and arranged to engage in a side wall of the housing part.

31. Apparatus according to Claim 28, characterised in that the coupling means is constructed and arranged to engage in the transport slider member part.

32. Apparatus according to Claim 29, characterised in that the coupling means is constructed and arranged to engage in a base wall of the housing.

33. Apparatus according to Claim 29, characterised in that the transport slider member part is guided along rails (404) moulded onto side walls of the housing part and that the coupling means (430) is constructed and arranged to engage in a guide rail.

34. Apparatus according to Claim 33, characterised in that the guide rails engage in guide slots provided on the transport slider member part and that the coupling means (514) is in the form of a cut-out tongue-like part of a member defining a guide slot.

35. Apparatus according to Claim 1, characterised in that a plurality of transport slider member parts are housed in a common housing part so that they are movable parallel to one another.

36. Apparatus according to Claim 35, characterised in that the release means are arranged so that they are offset with respect to one another.

37. Apparatus according to Claim 36, characterised in that the release means are arranged alternately near side walls of the housing part.


**Revendications**

1. Dispositif pour conserver des supports d'enregistrement, tels que des cassettes à bandes magnétiques, des disques audio ou vidéo, comportant
— un élément formant boîtier (10) sensiblement rectangulaire,

— un élément formant tiroir de déplacement (20) qui est guidé dans l'élément formant boîtier, et agencé de manière à loger les supports d'enregistrement et entraîne ces derniers depuis une position de rangement, dans laquelle ils sont insérés dans l'élément formant boîtier, jusque dans une position de prélèvement, dans laquelle ils peuvent être saisis commodément,

— un dispositif à ressort (30), qui précontraint l'élément formant tiroir de déplacement dans la position extérieure de prélèvement, et

— un dispositif de verrouillage, qui comporte des éléments coopérant réciproquement selon une liaison par formes complémentaires lorsque l'élément formant tiroir de déplacement est dans la position de rangement, peut être verrouillé de façon automatique sous l'effet de l'insertion de l'élément formant tiroir de déplacement à partir de sa position de prélèvement et comporte au moins un organe d'accouplement (52, 152), qui peut être déplacé par rapport à l'un des éléments devant être verrouillés, mais est soutenu dans la direction de déplacement de l'élément formant tiroir,

caractérisé en ce que sur l'un des éléments (20, 120) est prévu un organe de libération (70, 170) guidé de manière à être déplaçable dans la direction d'insertion de l'élément formant tiroir à l'encontre de la précontrainte d'un ressort et déverrouillant l'organe d'accouplement (52, 152).

2. Dispositif selon la revendication 1, caractérisé en ce que la course de déplacement, limitée par des butées, de l'organe de libération est dimensionnée de manière à être supérieure à ce qui est nécessaire pour le déverrouillage de l'organe d'accouplement.

3. Dispositif selon la revendication 1 ou 2, caractérisé en ce que l'organe d'accouplement et l'organe de libération sont logés en commun dans la partie formant tiroir de déplacement.

4. Dispositif selon l'une des revendications 1 à 3, caractérisé en ce que plusieurs organes de libération sont associés à l'organe d'accouplement.

5. Dispositif selon l'une des revendications 1 à 4, caractérisé en ce qu'à l'organe d'accouplement est associé un ressort particulier de précontrainte (56, 156), à l'aide duquel l'organe d'accouplement est précontraint dans la position verrouillée.

6. Dispositif selon la revendication 5, caractérisé en ce que le ressort de précontrainte de l'organe d'accouplement produit simultanément la précontrainte élastique pour l'organe de libération.

7. Dispositif selon l'une des revendications 1 à 6, caractérisé en ce que la masse de l'organe de libération et sa force de précontrainte élastique sont dimensionnées de manière qu'une libération intempestive sous l'effet de forces d'inertie ne peut intervenir que lors d'une accélération prédéterminée du dispositif dans la direction de sortie de l'élément formant tiroir.

8. Dispositif selon la revendication 1 pour le rangement de disques compacts, caractérisé en ce que chaque élément formant tiroir de déplacement comporte un module formant paroi avant (318), qui peut être écarté par basculement par rapport à une partie principale du tiroir, autour d'un axe (320) disposé transversalement par rapport à sa direction de déplacement, de sorte que le disque peut être saisi, selon un effet de pince, dans sa position de prélèvement, au niveau de ses surfaces principales tournées à l'opposé l'une de l'autre.

9. Dispositif selon la revendication 8, caractérisé en ce que pour chaque disque il est prévu un élément propre formant tiroir de déplacement, qui peut être ressorti hors de l'élément formant boîtier de sorte qu'une section, suffisante en tant qu'élément de guidage d'insertion, de la partie principale du tiroir fait saillie hors de l'élément formant boîtier.

10. Dispositif selon la revendication 9, caractérisé en ce que sur la partie principale du tiroir, des organes de freinage (336), qui s'appliquent contre le bord d'un disque inséré, dans la zone de ses moitiés tournées vers le module formant paroi avant, sont disposés à une distance réciproque inférieure au diamètre du disque et peuvent être écartés élastiquement l'un de l'autre de sorte que lors de l'insertion d'un disque, ils s'écartent jusqu'à une distance réciproque égale au diamètre du disque.

11. Dispositif selon la revendication 8, caractérisé en ce que le dispositif formant ressort de précontrainte pour chaque élément formant tiroir de déplacement comporte un ressort à branches, dont la boucle (330) et une branche (332) sont logées dans la partie principale du tiroir, tandis que l'extrémité libre de l'autre branche (334) s'engage dans une rainure associée (306), située dans le plan principal du tiroir et ménagée dans la paroi arrière de l'élément formant boîtier.

12. Dispositif selon la revendication 8, comportant un dispositif indicateur de l'état d'occupation de l'élément formant tiroir de déplacement, comprenant un dispositif palpeur pivotant (348), qui s'applique, sous la précontrainte d'un ressort, contre la surface d'un disque inséré, lors du basculement du module formant paroi avant dans la position d'insertion, et déplace un organe indicateur (356), caractérisé en ce que le dispositif palpeur et l'organe indicateur sont réalisés sous la forme de bras d'un levier à deux bras (350), qui est monté de manière à pouvoir pivoter dans le module formant paroi avant.

13. Dispositif selon la revendication 12, caractérisé en ce que le module formant paroi avant est précontraint dans la position écartée par basculement, par rapport à la partie principale du tiroir, au moyen d'un ressort en forme de lame (341) disposé au voisinage de l'axe du module, et en ce que le ressort en forme de lame possède un prolongement (346) qui produit la précontrainte élastique pour le dispositif palpeur.

14. Dispositif selon la revendication 10, caractérisé en ce que les organes de freinage sont formés par façonnage d'un seul tenant sur la partie principale du tiroir moulée par injection.

15. Dispositif selon la revendication 10, caractérisé en ce que l'angle entre les droites passant par le point médian au sommet d'un disque inséré et les points de contact des organes de freinage avec le bord du disque est inférieur à 160° et supérieur à 90°.

16. Dispositif selon la revendication 15, caractérisé en ce que l'angle est égal à environ 140°.

17. Dispositif selon la revendication 1, caractérisé en ce que l'organe d'accouplement (460) est réalisé d'un seul tenant avec l'un des éléments et peut être déplacé élastiquement par rapport à ce dernier.

18. Dispositif selon la revendication 1, caractérisé en ce que l'organe de libération (464) est réalisé d'un seul tenant avec l'un des éléments et est relié à ce dernier au moyen d'éléments intermédiaires élastiques (468).

19. Dispositif selon la revendication 1, caractérisé en ce que l'organe de libération (482) et l'organe d'accouplement (467) sont disposés dans l'élément formant boîtier.

20. Dispositif selon la revendication 1, caractérisé en ce que l'organe d'accouplement et l'organe de libération sont fabriqués séparément de l'élément formant boîtier et de l'élément formant tiroir de déplacement et sont insérés dans chacun de ces éléments.

21. Dispositif selon la revendication 20, caractérisé en ce qu'un ressort particulier de précontrainte est associé à chacun des organes.

22. Dispositif selon la revendication 21, caractérisé par des ressorts de précontrainte métalliques.

23. Dispositif selon la revendication 21, caractérisé en ce qu'au moins l'un des ressorts de précontrainte est formé par façonnage d'un seul tenant sur l'organe correspondant moulé par injection en matière plastique.

24. Dispositif selon la revendication 20, caractérisé en ce qu'un ressort commun de précontrainte est associé aux deux organes et que les deux organes sont accouplés mécaniquement entre eux.

25. Dispositif selon la revendication 1, caractérisé en ce que l'un des organes est moulé par injection en matière plastique d'un seul tenant avec l'un des éléments et que la liaison entre cet organe et cet élément est réalisée sous la forme d'un ressort de précontrainte pour l'organe.

26. Dispositif selon la revendication 25, caractérisé en ce que l'autre organe est fabriqué séparément de l'élément formant boîtier et de l'élément formant tiroir de déplacement et est inséré dans l'un de ces éléments.

27. Dispositif selon la revendication 1, caractérisé en ce que les deux organes sont accouplés entre eux mécaniquement par l'intermédiaire de guides en coin.

28. Dispositif selon la revendication 1, caractérisé en ce que l'organe d'accouplement est déplaçable parallèlement au plan principal du support d'enregistrement devant être conservé.

29. Dispositif selon la revendication 1, caractérisé en ce que l'organe d'accouplement est déplaçable perpendiculairement au plan principal du support d'enregistrement devant être conservé.

30. Dispositif selon la revendication 28, caractérisé en ce que l'organe d'accouplement est réalisé de manière à s'encliqueter et est monté dans une paroi latérale de l'élément formant boîtier.

31. Dispositif selon la revendication 28, caractérisé en ce que l'organe d'accouplement est réalisé de manière à s'encliqueter et est monté dans l'élément formant tiroir de déplacement.

32. Dispositif selon la revendication 29, caractérisé en ce que l'organe d'accouplement est réalisé de manière à s'encliqueter et est monté dans une paroi du fond du boîtier.

33. Dispositif selon la revendication 29, caractérisé en ce que l'élément formant tiroir de déplacement est guidé le long des rails (404) formés par façonnage sur des parois latérales de l'élément formant boîtier et en ce que l'organe d'accouplement (430) est réalisé de manière à s'encliqueter et est disposé dans un rail de guidage.

34. Dispositif selon la revendication 33, caractérisé en ce que les rails de guidage s'engagent dans des fentes de guidage ménagées dans l'élément formant tiroir de déplacement et en ce que l'organe d'accouplement (514) est réalisé sous la forme d'une section, en forme de languette découpée, d'une barrette limitant la fente de guidage.

35. Dispositif selon la revendication 1, caractérisé en ce qu'une multiplicité d'éléments formant tiroirs de déplacement sont logés de manière à être déplaçables parallèlement les uns aux autres dans un élément commun formant boîtier.

36. Dispositif selon la revendication 35, caractérisé en ce que les organes de libération sont disposés en étant décalés les uns par rapport aux autres.

37. Dispositif selon la revendication 36, caractérisé en ce que les organes de libération sont disposés d'une manière alternée à proximité des parois latérales de l'élément formant boîtier.

Fig:1

EP 0 163 221 B1

Fig.2

Fig.3

EP 0 163 221 B1

Fig. 5

Fig. 7

Fig. 4

Fig. 6

4

Fig. 8

Fig. 9

**Fig. 10**

**Fig. 11**

**Fig. 12**

## Fig. 13

454   450   468

14   14

452   462   466

456   458   460   464

## Fig. 14

450   466

13

462   464   460   13

454   468

452

7

## Fig. 16

## Fig. 15

EP 0 163 221 B1

*Fig. 18*

*Fig. 17*

Fig. 19

558           556  554

548

552

554

21

546

550

542

540

*Fig. 20*

552

548

544

550

540    552

*Fig. 21*

548

558

540

*Fig. 22*

576    578

582

584

586

572    _Fig. 23_    570    574

25

584

576    582

578    580

_Fig. 24_

25

_Fig. 25_

570

572    576

574    578

Fig. 26